# FASCICULE DE BREVET EUROPEEN

(11) **EP 2 509 738 B1**
(45) Date de publication et mention de la délivrance du brevet: **25.11.2015**
(21) Numéro de dépôt: 10787776.3
(22) Date de dépôt: 09.12.2010
(51) Int. Cl.: B23K 9/12, B23K 9/167, B23K 9/26

(54) **DISPOSITIF DE CHANGEMENT D'ELECTRODE A SECURITE AMELIOREE**
VORRICHTUNG ZUM AUSTAUSCH EINER ELEKTRODE MIT VERBESSERTER SICHEREIT
DEVICE FOR EXCHANGING AN ELECTRODE WITH IMPROVED SAFETY

(30) Priorité: 11.12.2009 FR 0958885
(43) Date de publication de la demande: 17.10.2012
(73) Titulaire: Areva NC, 75009 Paris (FR)
(72) Inventeur: ALLARD, Jean-Luc, F-30430 Mejanne le Clap (FR); SCHWANCK, Jean-Pierre, F-26130 Saint Paul Trois Chateaux (FR)
(74) Mandataire: Ilgart, Jean-Christophe
(86) Numéro de dépôt international: PCT/EP2010/069229
(87) Numéro de publication internationale: WO 2011/070093

(56) Documents cités:
- FR-A5- 2 094 353
- JP-A- 3 226 380
- JP-A- 2001 108 786

## Description

### DOMAINE TECHNIQUE ET ART ANTERIEUR

La présente invention se rapporte à un dispositif de changement d'électrode, plus particulièrement à un dispositif de mise en place et de retrait d'une électrode sur un dispositif destiné à la fabrication de crayon de combustible nucléaire

Le document JP2001108786 décrit un dispositif de ce type comportant un ensemble comprenant un passage traversant d'axe longitudinal depuis un logement pour recevoir une extrémité d'un porte-électrode faisant partie d'un outillage de soudage et formant un mandrin, ledit axe longitudinal étant destiné à être sensiblement vertical, des moyens pour serrer ou desserrer un mandrin du porte-électrode, et des moyens pour solidariser l'électrode audit dispositif.

Un crayon de combustible comporte une gaine dans laquelle sont disposées des pastilles de combustible nucléaire et un bouchon pour fermer la gaine.

Le bouchon est ensuite soudé sur toute sa périphérie par un premier dispositif de soudage. Le bouchon comporte un alésage par lequel le crayon est rempli d'un gaz. Cet alésage est ensuite obturé par un autre dispositif de soudage, appelé dispositif de queusotage.

Chacun de ces dispositifs de soudage comporte une électrode pour effectuer le soudage. Cette électrode s'use et doit être remplacée. Ce remplacement est alors effectué manuellement par un opérateur.

L'électrode est montée dans un outil porte-électrode par une extrémité, l'autre extrémité servant au soudage.

L'opérateur, pour remplacer l'électrode, pince avec ses doigts l'extrémité libre de l'électrode et tire dessus pour la retirer du porte-électrode. Pour la mise en place d'une nouvelle électrode, il saisit l'électrode par l'extrémité de soudage et place l'autre extrémité dans le porte-électrode.

Par ailleurs, ces dispositifs sont montés dans des boîtes à gant, isolant les crayons de l'opérateur. L'opérateur ne peut alors intervenir sur les dispositifs de soudage que par l'intermédiaire de gants fixés sur une paroi de la boîte à gant. Ces interventions sont donc laborieuses.

En outre, il faut veiller à l'intégrité du confinement, et, de ce fait, éviter toute déchirure des gants. Or, l'extrémité des électrodes destinées au soudage est extrêmement pointue. Par conséquent, l'opérateur peut déchirer ses gants lors du changement d'électrode.

Or, nous rappelons que l'intérieur des boîtes à gant peut être contaminante, une telle déchirure pourrait alors contaminer l'opérateur et l'environnement extérieur.

### EXPOSÉ DE L'INVENTION

C'est par conséquent un but de la présente invention d'offrir un dispositif pour changer les électrodes offrant une grande sécurité pour l'opérateur, plus particulièrement protégeant des risques de déchirure par l'électrode.

Le but énoncé ci-dessus est atteint par un dispositif de changement d'électrode comportant un réceptacle d'électrodes usagées, des moyens permettant une désolidarisation ou une solidarisation de l'électrode du porte-électrode, sa solidarisation au dispositif et la chute par gravité de l'électrode usagée dans le réceptacle, le porte-électrode étant dans une position verticale lors des étapes de remplacement.

Ce dispositif permet alors d'éviter toute manipulation de l'électrode usagée et de réduire les étapes de manipulation d'une électrode neuve.

Grâce au dispositif selon la présente invention, l'opérateur n'a qu'à introduire l'électrode neuve dans le dispositif par son extrémité non affûtée, toutes les autres étapes ne nécessitant pas de contact direct avec l'électrode.

De manière avantageuse, le dispositif permet de monter l'électrode neuve directement à la bonne cote.

La présente invention a alors principalement pour objet un dispositif de retrait d'une électrode d'un porte-électrode et/ou de montage d'une électrode dans un porte-électrode, ledit porte-électrode faisant partie d'un dispositif de soudage, ledit dispositif comportant un réceptacle d'électrodes usagées muni d'un orifice et un ensemble monté sur ledit orifice, ledit ensemble comprenant un passage traversant d'axe longitudinal reliant un logement pour recevoir une extrémité du porte-électrode formant un mandrin et le réceptacle, ledit axe longitudinal étant destiné à être sensiblement vertical, des moyens pour serrer ou desserrer un mandrin du porte-électrode, des moyens pour solidariser l'électrode audit dispositif et des moyens pour autoriser au non l'introduction de l'électrode usagée dans le réceptacle.

L'outil comprend, par exemple un logement et les moyens pour serrer ou desserrer le mandrin de porte-électrode et les moyens pour solidariser l'électrode audit dispositif, et un support monté sur l'orifice du réceptacle, celui-ci comprenant des moyens pour autoriser au non l'introduction de l'électrode usagée dans le réceptacle.

Par exemple, les moyens pour serrer ou desserrer le mandrin de porte-électrode sont formés par une empreinte, présente dans ledit logement, correspondant à celle de l'écrou de serrage/desserrage du mandrin, L'empreinte peut être formée soit directement par les parois latérales du logement, soit dans une plaquette rapportée dans le fond du logement.

Les moyens pour solidariser l'électrode audit dispositif peuvent comporter deux éléments mobiles autour de deux axes munis de deux extrémités destinées à venir en contact avec l'électrode pour la pincer. Par exemple, les deux éléments mobiles sont contenus dans un plan contenant l'axe longitudinal ou dans un plan perpendiculaire à l'axe longitudinal. Des moyens de rappel sont avantageusement prévus pour ramener en position écartée l'un de l'autre les deux éléments mobiles pour solidariser l'électrode audit dispositif.

De manière avantageuse, les moyens pour autoriser ou non l'introduction de l'électrode usagée dans le réceptacle comportent par exemple un obturateur obturant le passage longitudinal, muni d'un orifice qui, en position repos, est désaligné dudit passage, et est apte à être aligné avec celui-ci par manipulation de l'obturateur. L'obturateur peut être monté apte à coulisser selon un axe orthogonal à l'axe longitudinal dans le support. Des moyens de rappel de l'obturateur en position d'obturation du passage sont avantageusement prévus.

L'obturateur comporte par exemple une platine munie dudit orifice et une tige de commande accessible à partir de l'extérieur du support.

Le dispositif de retrait d'une électrode d'un porte-électrode et/ou de montage d'une électrode dans un porte-électrode comporte avantageusement des moyens pour régler la distance entre l'obturateur et le logement dudit mandrin du dispositif. Par exemple, l'outil est monté sur le support au moyen d'au moins deux tiges filetées, les moyens de réglage sont formés par des ensembles d'écrou et/ou contre-écrou vissés sur les tiges filetées.

Le dispositif peut également comporter un support de porte-électrode, le porte-électrode comportant au niveau de son extrémité portant l'électrode une pièce tronconique, ledit support de porte-électrode formant un logement de forme tronconique correspondant à celle de la pièce tronconique du porte-électrode et formant un prolongement amont du logement de porte-électrode. Le support de porte-électrode est, par exemple solidaire axialement dudit outil et est apte à pivoter par rapport à celui-ci autour de l'axe longitudinal.

Par exemple, le support de porte-électrode comporte un pied annulaire à l'opposé d'une extrémité par laquelle est inséré le porte-électrode, ledit pied étant reçu dans un logement dudit outil. Le support de porte-électrode peut comporter un taraudage destiné à coopérer avec le filetage du porte-électrode, ledit taraudage étant en amont du logement de forme tronconique.

Le dispositif peut alors comporter des moyens de retenue axiale du support de porte-électrode formés par des pattes fixées sur l'outil.

La présente invention a également pour objet un procédé de retrait d'une électrode d'un porte-électrode au moyen du dispositif selon la présente invention, comportant les étapes :
- introduction du porte-électrode dans le logement, l'élément de serrage du mandrin pénétrant dans les moyens de serrage/desserrage et l'extrémité libre de l'électrode venant en contact avec l'obturateur,
- application d'un couple de desserrage au porte-électrode,
- solidarisation de l'électrode audit dispositif,
- retrait du porte-électrode,
- désolidarisation de l'électrode dudit dispositif,
- ouverture du passage menant au réceptacle et chute par gravité de l'électrode dans ledit réceptacle.

Le couple de desserrage peut être appliqué au dit support de porte-électrode et transmis au porte-électrode.

Lors de l'introduction du porte-électrode dans le logement, le porte-électrode est avantageusement vissé dans le support de porte-électrode.

La présenter invention a également pour objet un procédé de montage d'une électrode d'un porte-électrode au moyen du dispositif selon la présente invention, comportant les étapes :
- mise en place de l'électrode dans le passage, l'extrémité affûtée de l'électrode venant en contact avec l'obturateur,
- mise en place du porte-électrode sans électrode dans le logement, l'extrémité de l'électrode faisant saillie du dispositif pénétrant dans le mandrin,
- application d'un couple de serrage sur le mandrin, solidarisant l'électrode au mandrin,
- retrait du porte-électrode muni de l'électrode.

Le couple de serrage peut être appliqué au dit support de porte-électrode et transmis au porte-électrode.

Avantageusement, avant ou lors de l'introduction du porte-électrode dans le logement, le porte-électrode est vissé dans le support de porte-électrode, et avant ou lors du retrait du porte-électrode, le porte-électrode est séparé du support de porte-électrode.

### BRÈVE DESCRIPTION DES DESSINS

La présente invention sera mieux comprise à l'aide de la description qui va suivre et des dessins sur lesquels :
- La figure 1A est une vue de face d'un premier mode de réalisation d'un dispositif de changement d'électrode.
- La figure 1B est une vue de détail de la figure 1A.
- La figure 2 est une vue en coupe longitudinale de la partie supérieure du dispositif de la figure 1A.
- La figure 3 est une vue de dessus du dispositif de la figure 1A partiellement en arrachée.
- La figure 4A est une vue en perspective d'une pièce isolée du dispositif de la figure 1A formant support.
- La figure 4B est une vue de dessus de la figure 4A.
- La figure 5 est une vue de dessus d'un obturateur destiné à être monté dans le support de la figure 4A.
- La figure 6A est une vue en perspective d'une pièce isolée de l'outil du dispositif de la figure 1A.
- La figure 6B est une vue en coupe de la pièce de la figure 6A le long du plan A-A.
- La figure 7 est une vue en perspective d'une pièce isolée formant pince de l'outil.
- La figure 8 est une vue en perspective d'un porte-électrode muni d'une électrode, auquel le dispositif de la figure 1A est particulièrement adapté.
- La figure 9A est une vue de côté d'un deuxième mode de réalisation d'un dispositif de changement d'électrode.
- La figure 9B est une vue en coupe longitudinale de la partie supérieure du dispositif de la figure 9A.
- La figure 9C est une vue en perspective de la partie supérieure du dispositif de la figure 9A.
- La figure 10 est une vue en perspective d'une pièce isolée du dispositif de la figure 9A formant un support de porte-électrode.
- La figure 11A est une vue en perspective d'une pièce isolée du dispositif de la figure 1A formant support.
- La figure 11B est une vue de dessus de la figure 11A.
- La figure 12 est une vue de dessus d'un obturateur destiné à être monté dans le support de la figure 11A.
- La figure 13A est une vue en perspective d'une des pièces de l'outil du dispositif de la figure 9A.
- La figure 13B est une vue de dessus d'une autre pièce de l'outil fixée sur la pièce de la figure 13A.
- La figure 13C est une vue en coupe de la pièce de la figure 13A le long du plan B-B.
- La figure 14 est une vue en perspective d'une pièce isolée formant pince de l'outil.
- La figure 15 est une vue en perspective d'une pièce isolée permettant le serrage et le desserrage du mandrin.
- Les figures 16A et 16B sont des vues en coupe transversale selon deux plans parallèles C-C et D-D du dispositif de la figure 9B, en position repos.
- La figure 17A est une vue identique à celle de la figure 16A, la pince étant en position serrée sur l'électrode.
- La figure 17B est une vue identique à celle de la figure 16B, l'obturateur étant en position ouverte.
- La figure 18 est une vue en perspective d'un porte-électrode muni d'une électrode auquel le dispositif de la figure 9A est particulièrement adapté.

### EXPOSÉ DÉTAILLÉ DE MODES DE RÉALISATION PARTICULIERS

Les dispositifs décrits présentent une symétrie générale autour d'un axe longitudinal X.

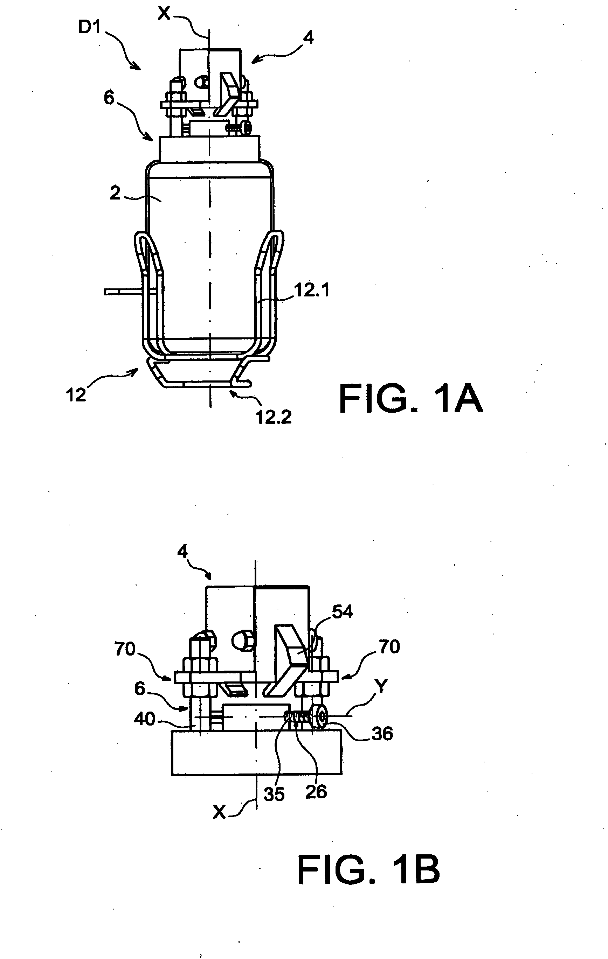

Sur les figures 1A et 1B, on peut voir une vue de côté d'un premier exemple D1 d'un dispositif de changement d'électrode, particulièrement adapté aux remplacements des électrodes de soudage d'un bouchon sur une gaine d'un crayon de combustible nucléaire.

Le dispositif D1 comporte un réceptacle 2 destiné à contenir les électrodes usagées, un outil de changement d'électrode 4 pour retirer et mettre en place une électrode sur un porte-électrode, et un support 6 d'outil de changement d'électrode monté de manière amovible sur le réceptacle 2, formant également un bouchon pour le réceptacle.

Le dispositif D1 présente un axe longitudinal X et un passage 7 d'électrode d'axe X traversant l'outil 4 et le support 6, et débouchant dans le réceptacle 2.

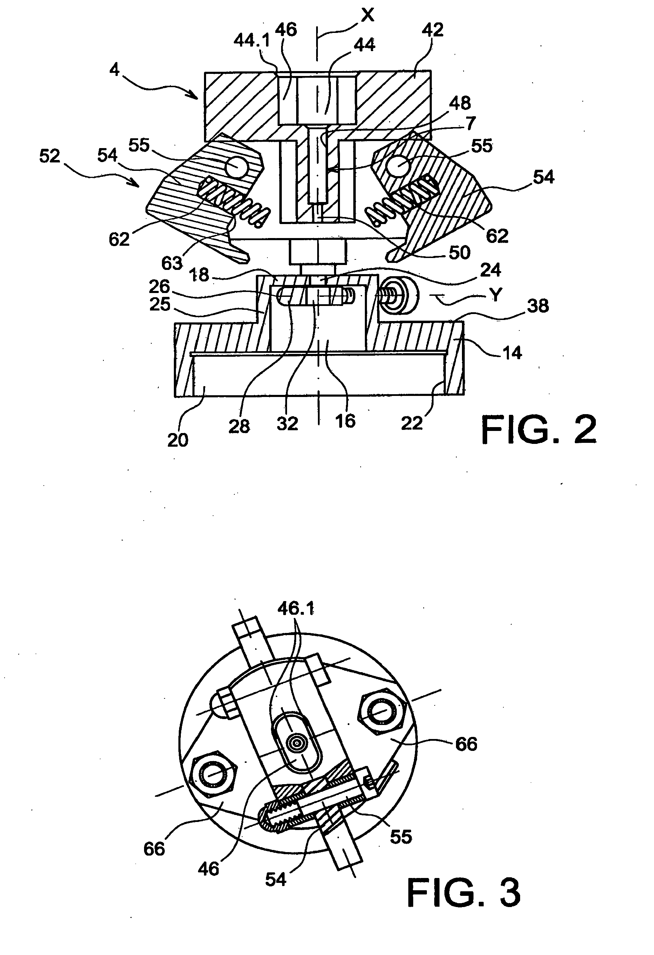

Le passage 7 est visible sur la vue en coupe de la figure 2.

L'outil de changement d'électrode 4 sera désigné par « outil 4 » dans la suite de la description à des fins de simplicité.

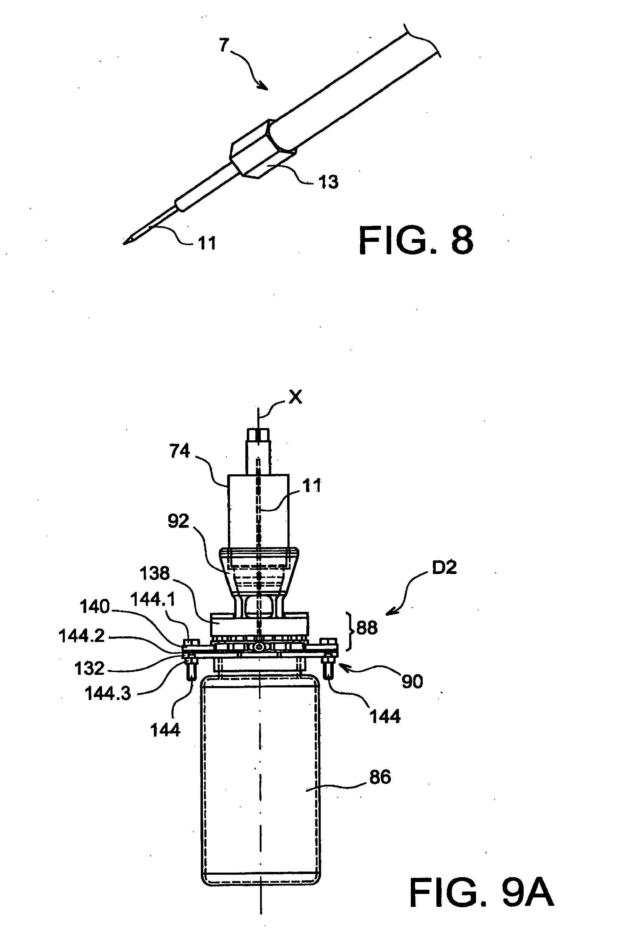

Sur la figure 8, on peut voir un exemple de porte-électrode 7 d'un dispositif de soudage auquel le dispositif D1 est adapté.

Le porte-électrode 7 comporte un corps allongé muni à une extrémité d'un mandrin destiné à maintenir une électrode 11; le mandrin comporte un écrou de serrage 13 de l'électrode 11.

Le réceptacle 2 est formé par un flacon muni d'un orifice supérieur (non visible) bordé d'un col (non visible). Dans l'exemple représenté, le réceptacle est monté dans une structure de maintien 12 en position vertical.

La structure de maintien 12 est réalisée, dans l'exemple représenté, par une armature en fils métalliques pliés décrivant d'une part un logement 12.1 pour le réceptacle et d'autre part des pieds 12.2 pour assurer une position verticale stable du réceptacle.

Tout autre structure de maintien, par exemple réalisée en plastique moulé, peut convenir et ne sort pas du cadre de la présente invention.

Le col 10 est avantageusement muni d'un filetage permettant la solidarisation du support 6 sur le réceptacle.

On pourrait cependant prévoir d'autres moyens de solidarisation par exemple par encliquetage ou par une liaison type baïonnette.

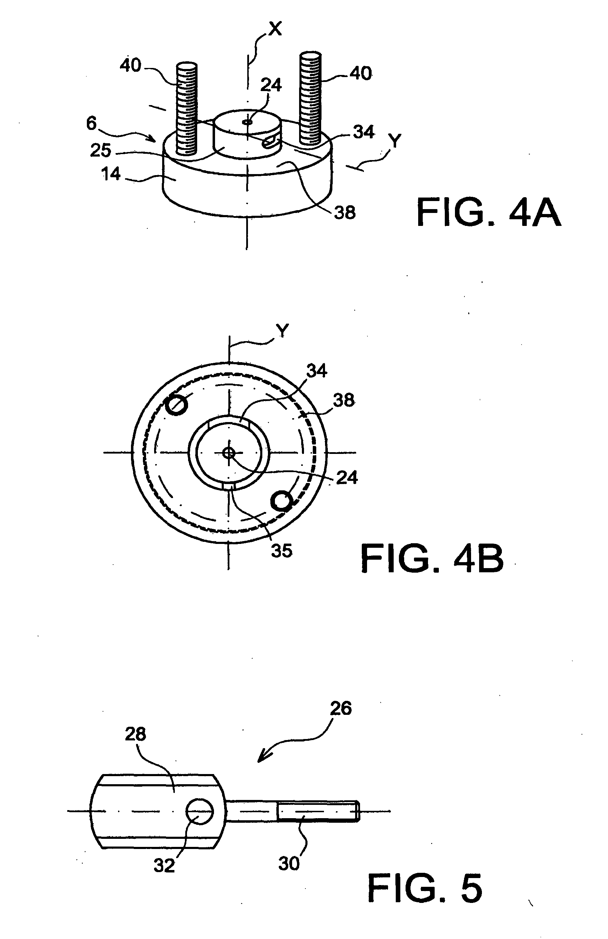

Le support d'outil 6, particulièrement visible sur les figures 2, 4A et 4B, comporte un corps 14 d'axe longitudinal X, muni d'un passage 16 traversant également d'axe longitudinal X destiné à permettre le passage d'une électrode usagée en direction de l'intérieur du réceptacle 2.

Le corps 14 comporte également à une première extrémité longitudinale une paroi d'extrémité 18 orientée du côté de l'outil 4, et à une deuxième extrémité longitudinale, un évidement circulaire 20 bordé d'un taraudage 22 coopérant avec le filetage du col du réceptacle, le col est donc logé dans l'évidement 20.

La paroi 18 comporte un orifice 24 formant une extrémité du passage 16.

Le corps 14 comporte une partie intermédiaire 25 entre la paroi d'extrémité 18 et l'évidement 20, recevant un obturateur 26 de l'orifice 24 monté mobile dans le corps 14 le long d'un axe Y orthogonal à l'axe longitudinal X.

L'obturateur 26 coulisse le long d'une face de la paroi 18 opposée à celle orientée du côté de l'outil 4.

Sur la figure 5, on peut un exemple d'obturateur 26 de type tiroir représenté seul, comportant une platine 28 et une tige de commande 30 fixée à une extrémité de la platine 28.

La platine 28 est, elle-même, munie d'un orifice traversant 32 de diamètre suffisant pour permettre le passage d'une électrode.

La partie intermédiaire 25 comporte une paroi latérale munie d'une mortaise latérale 34 dans laquelle coulisse la platine 28 et, diamétralement à l'opposé, un alésage transversal 35 d'axe Y dans lequel coulisse la tige de commande 30.

En déplaçant la platine 28 au moyen de la tige de commande 30 le long de l'axe Y, l'orifice 32 de la platine peut être aligné avec l'orifice traversant 24 de la paroi d'extrémité 18, permettant alors à une électrode de traverser le support 6 et de tomber dans le réceptacle 2.

La platine 28 est normalement en position d'obturation. De manière avantageuse, un moyen de rappel élastique est prévu pour ramener la platine 28 dans une position d'obturation de l'orifice traversant 24.

Dans l'exemple représenté, un ressort hélicoïdal 35 monté en réaction entre la surface extérieure de la partie intermédiaire 25 et un bouton 36 fixé à l'extrémité libre de la tige de commande 30.

Dans l'exemple représenté, l'orifice traversant 32 de la platine 28 est positionné de telle sorte que, pour aligner celui-ci avec l'orifice traversant 24 de la paroi d'extrémité, il faut appliquer un effort sur la tige de commande 30 en direction de l'axe X sur la tige de commande.

En variante, l'obturateur pourrait être prévu de telle sorte que l'on applique une effort en éloignement de l'axe X pour aligner les orifices 24 et 32, i.e. qu'on exerce un effort de traction sur la tige 30.

Dans l'exemple représenté, la platine comporte avantageusement des bords latéraux amincis, ce qui limite les frottements lors du coulissement de la platine dans la mortaise latérale 34.

Dans l'exemple représenté, la partie intermédiaire 25 présente un diamètre extérieur inférieur à celui de l'extrémité comprenant l'évidement, cette réduction de diamètre permet de loger l'extrémité de la tige de commande 30 munie du bouton 30. L'encombrement latéral est alors limité.

La réduction de diamètre permet également de ménager une surface latérale annulaire 38 de laquelle deux tiges filetées 40 font saillie et sur lesquelles l'outil 6 est monté.

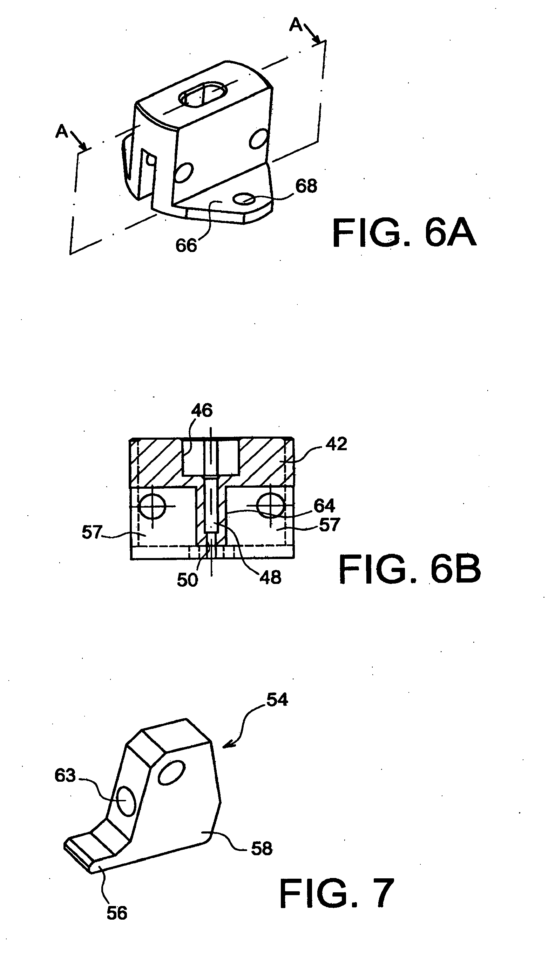

L'outil 6, que l'on peut voir représenté seul sur les figures 6A et 6B, comporte un corps 42 muni d'un passage traversant 44 d'axe coaxial à l'axe X destiné au passage de l'électrode. Celui-ci forme également un logement de l'extrémité du porte-électrode, permettant de désolidariser l'électrode du porte-électrode et de solidariser l'électrode au porte-électrode.

Pour cela, le passage comporte une première portion 46 à une extrémité longitudinale 44.1 du passage opposée au support comportant une section transversale apte à bloquer en rotation l'extrémité du porte-électrode, plus particulièrement l'écrou 13 destiné à maintenir l'électrode serrée dans le porte-électrode. Le passage 44 comporte une deuxième portion 48 de section réduite et une troisième portion 50 de diamètre encore réduit assurant un bon guidage lors de l'introduction de l'électrode dans l'outil.

Dans l'exemple représenté, le logement 46 a une section de forme oblongue, et l'écrou 13 a une section hexagonale, la distance séparant les deux faces parallèles 46.1 de la paroi du logement oblong étant sensiblement égale à celle séparant deux faces parallèles de l'écrou 13.

L'outil comporte également des moyens 52 pour immobiliser l'électrode dans l'outil. Dans l'exemple représenté, les moyens 52 d'immobilisation sont formés par une pince actionnée par l'opérateur.

Les moyens 52 comportent deux pièces 54 montées mobiles en rotation dans le corps 42 autour d'axes 55 orthogonaux à l'axe X. Une pièce 54 est représentée seule sur la figure 7. Les deux pièces 54 sont diamétralement opposées par rapport à l'axe longitudinal X.

Les pièces 54 sont munies chacune d'un doigt 56 orienté vers l'axe X et destiné à venir en contact avec l'électrode, l'électrode étant alors serrée entre les deux doigts 56.

Les pièces 54 comportent également deux extrémités de manipulation 58 orientées à l'opposé de l'axe X au moyen desquelles l'opérateur déplace les pièces 54 autour des axes 55.

Les deux doigts 56 se rapprochent de l'électrode dans l'espace séparant l'outil 4 et le support d'outil 6.

Le corps 42 comporte deux logements 57 s'étendant orthogonalement à l'axe X et disposés de part et d'autre de celui-ci, recevant chacun une pièce 54, comme cela est visible sur la figure 2.

Des moyens de rappel vers une position écartée des doigts de la pince sont également prévus, ceux-ci sont formés par deux ressorts 62 montés en réaction entre les pièces 54 et une partie centrale 64 du corps 42. Dans l'exemple représenté, les ressorts 62 sont montés dans des alésages 63 réalisés dans le bord des pièces 54.

En outre, comme décrit précédemment, l'outil est monté sur deux tiges filetées. Pour cela, le corps 42 de l'outil 6 comporte deux oreilles latérales 66 de part et d'autre de l'axe X percées chacune d'un alésage 68 traversé par une tige filetée.

La position de l'outil 4 par rapport au support 6 est alors réglable grâce à des ensembles d'écrou et contre-écrou 70.

Les ensembles écrou et contre-écrou 70 permettent d'ajuster la distance entre le fond de la première portion 46 du passage du corps de l'outil, contre lequel vient en appui le porte-électrode, et la platine 28 de l'obturateur 26.

Cette distance correspond à la longueur de laquelle l'électrode dépasse du porte-électrode. Cette distance doit être fixée de manière précise pour effectuer un bon soudage. Ainsi, cette longueur est fixée automatiquement lors du montage de l'électrode. L'opérateur n'a pas alors à intervenir pour régler cette distance.

Ce dispositif de changement d'électrode D1 est particulièrement adapté au changement des électrodes de soudage pour lesquelles le porte-électrode représenté sur la figure 8 est relativement petit.

Nous allons maintenant expliquer le fonctionnement de ce dispositif de changement d'électrode D1.

Pour effectuer le retrait d'une électrode, l'opérateur démonte le porte-électrode du dispositif de soudage ; lors de cette étape, il manipule l'extrémité du porte-électrode opposée à celle d'où fait saillie l'électrode.

Lors d'une étape suivante, il introduit le porte-électrode dans l'outil 4, en insérant tout d'abord l'extrémité libre de l'électrode dans le passage de l'outil 4, jusqu'à ce que le porte-électrode vienne en butée contre le fond de la première portion 46 du passage 7.

L'électrode est, quant à elle, en appui sur la face supérieure de la platine 28 de l'obturateur 26.

L'opérateur exerce ensuite un couple sur le porte-électrode dans un sens de desserrage de l'écrou du porte-électrode grâce à la coopération de l'écrou et de l'empreinte de la première portion 46 du passage traversant de l'outil 4.

L'électrode n'est alors plus solidaire du porte-électrode.

L'opérateur exerce alors d'une main un effort sur les deux pièces 54 de la pince pour les rapprocher et serrer l'électrode, celle-ci est alors immobilisée dans l'outil 4, et retire de l'autre main le porte-électrode.

L'opérateur relâche ensuite les pièces 54 qui s'écartent de l'électrode sous l'effet des ressorts 62.

L'opérateur exerce ensuite une poussée sur le bouton 36 de la tige de commande 30 de l'obturateur 26, ce qui aligne les trous 32, 24 traversants de la platine 28 et de la paroi 18, provoquant la chute de l'électrode dans le réceptacle 2.

Grâce à l'invention, l'opérateur a pu retirer l'électrode sans avoir à manipuler son extrémité affûtée.

L'électrode usagée peut alors être mise au rebut en renversant le réceptacle duquel le support et l'outil ont été retirés.

Pour mettre en place une électrode neuve, l'opérateur saisit une électrode neuve dans sa boîte par son extrémité non affûtée. Il est à noter que c'est la seule extrémité que peut attraper l'opérateur.

Il introduit ensuite l'électrode dans le dispositif en insérant en premier l'extrémité affûtée de l'électrode dans l'outil 4, puis dans le support 6 jusqu'à ce qu'elle vienne en butée contre la face supérieure de la platine 28 de l'obturateur 26.

L'opérateur saisit ensuite le porte-électrode par l'extrémité opposée à celle destinée à tenir l'électrode et le monte sur l'extrémité de l'électrode dépassant de l'outil 4, cette extrémité n'est pas affûtée.

Le porte-électrode vient en butée contre le fond de la première portion 46 du passage 7 de l'outil. Si la position de l'outil 4 par rapport au support 6 a été correctement réglée, la longueur de l'électrode dépassant du porte-électrode est correcte.

L'opérateur solidarise ensuite l'électrode dans le porte-électrode en serrant l'écrou ; pour cela ; il exerce un couple sur le porte-électrode, de sens opposé à celui appliqué lors du retrait de l'électrode, l'écrou est serré via l'empreinte de l'outil 4.

L'opérateur retire ensuite le porte-électrode muni d'une électrode neuve. Le porte-électrode muni d'une électrode neuve est prêt à être remis en place dans le dispositif de soudage.

Grâce à l'invention, l'opérateur n'a jamais à manipuler l'extrémité affûtée de l'électrode, celle-ci étant protégée lors de toutes les étapes de retrait et de mise en place de l'électrode, et également lors de la mise au rebut.

Les seules étapes où l'extrémité affûtée de l'électrode est « visible » sont lors du retrait du porte-électrode du dispositif de soudage et de mise en place du porte-électrode avec la nouvelle électrode sur le dispositif de soudage ; or, lors de ces étapes l'opérateur n'a pas à manipuler le dispositif de remplacement D1, il peut donc se concentrer sur l'extrémité affûtée.

De plus, la manipulation est très simple, ce qui est particulièrement avantageux dans le cas d'une manipulation en boîte à gant.

Les risques de déchirures des gants par l'extrémité affûtée sont donc fortement réduits.

En outre, le positionnement exact de l'électrode dans le porte-électrode est obtenu facilement.

Dans l'exemple représenté, le dispositif D1 est mobile mais on peut prévoir que le réceptacle soit reçu dans un logement fixe de la boîte à gant.

L'ensemble du dispositif peut être réalisé en un matériau dur comme l'acier inox ou l'aluminium anodisé. Par contre, la platine de l'obturateur, est réalisée en acier inox pour garantir qu'il n'y ait pas de dépôt de particules d'aluminium sur l'électrode neuve, ce qui pourrait détériorer la qualité des soudures.

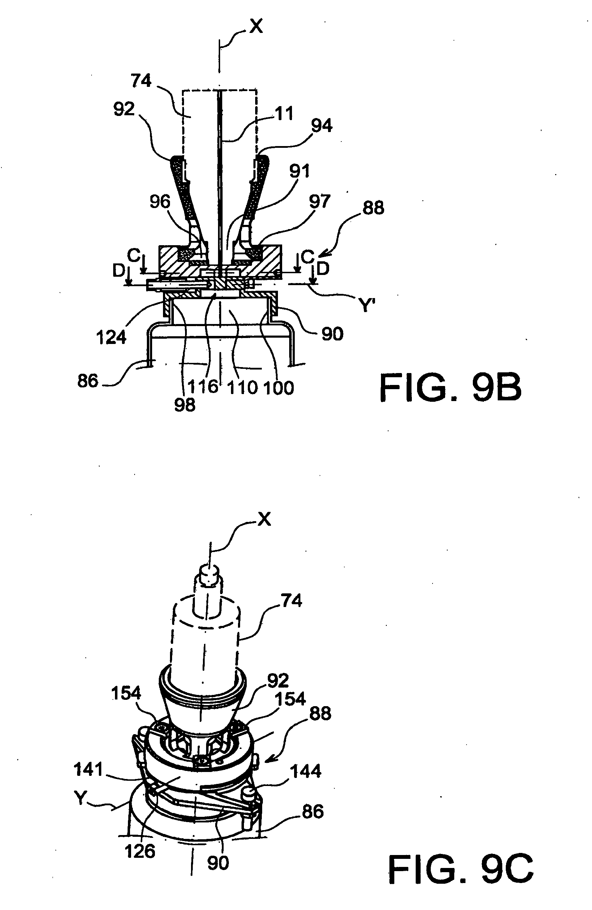

Sur les figures 9A à 9C, on peut voir un autre exemple de réalisation d'un dispositif de changement d'électrode D2 particulièrement adapté au changement des électrodes de queusotage, destinés au soudage de l'extrémité des bouchons de crayons.

Cependant, comme nous l'expliquerons par la suite, le dispositif D2 peut être adapté au remplacement des électrodes de soudage comme nous l'expliquerons par la suite.

Le dispositif D1 peut, quant à lui, être adapté aux remplacements des électrodes de queusotage.

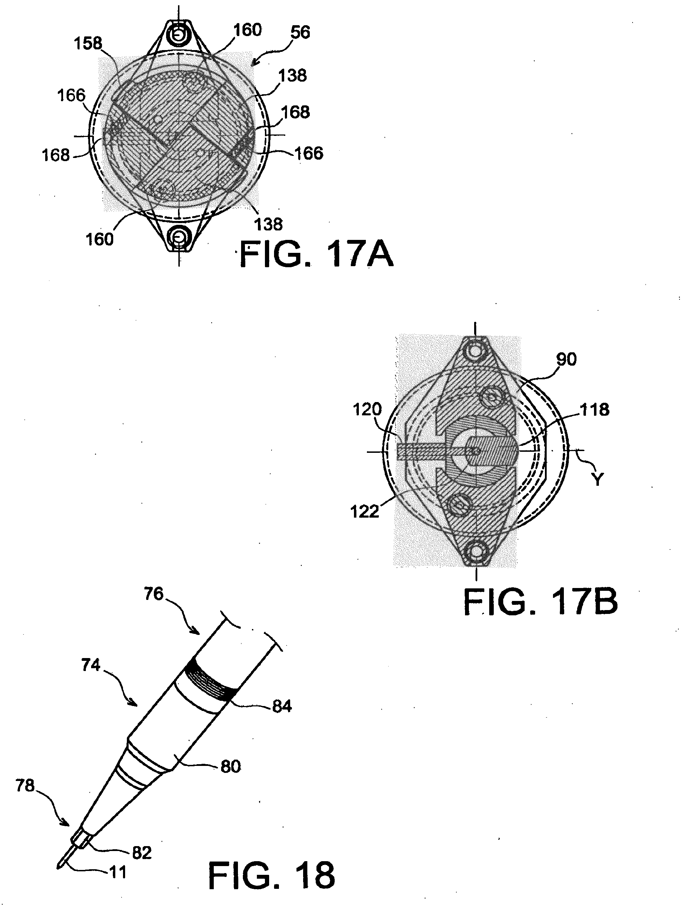

Tout d'abord, nous allons décrire un exemple de porte-électrode de queusotage représenté sur la figure 18.

Le porte-électrode de queusotage 74 comporte un corps 76 dont le mandrin 78 portant l'électrode est entouré d'une pièce tronconique 80 en porcelaine ; l'extrémité du mandrin fait saillie de la pièce tronconique 80 et est muni d'un écrou 82 pour serrer l'électrode 11 dans le corps 76.

Le corps 76 de l'exemple, de porte-électrode représenté comporte également un filetage 84 en amont de la pièce tronconique 80 destiné à son montage dans le dispositif de queusotage.

Le dispositif D2 comporte comme le dispositif D1, un réceptacle 86, un outil de changement d'électrode 88 et un support d'outil 90 monté sur le réceptacle 86 et supportant l'outil de changement d'électrode 88. Le dispositif est traversé axialement par un passage 91 obturable.

L'outil de changement d'électrode 88 sera désigné par « outil 88 » dans la suite de la description à des fins de simplicité.

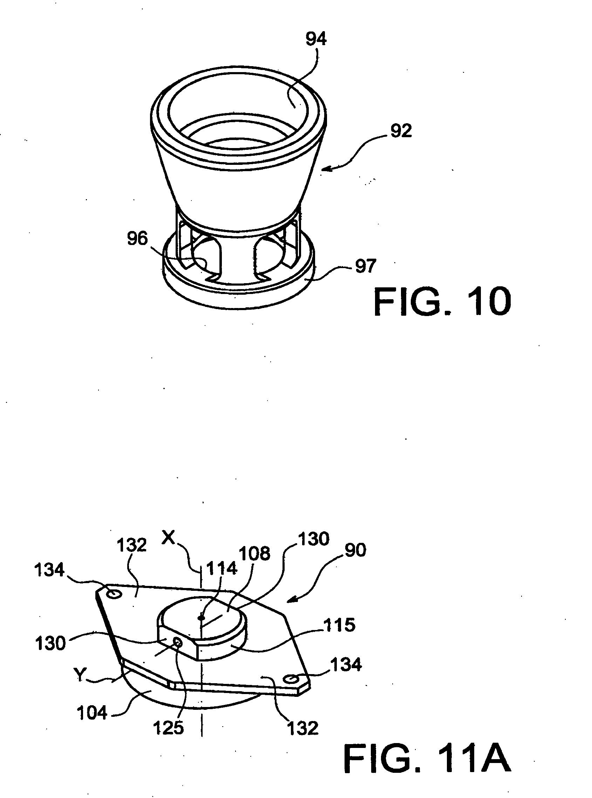

Le dispositif D2 comporte en outre un support de porte-électrode 92 monté sur l'outil 88 représenté sur la figure 10. Le support de porte-électrode 92 est par exemple en Ertalon^{®}.

Le support de porte-électrode 92 a sensiblement la forme d'un tronc de cône creux dont le profil intérieur correspond au profil extérieur de la pièce tronconique 80 du porte-électrode 76, le cône 80 étant destiné à être introduit dans le support 92.

Le support de porte-électrode 92 comporte une ouverture 94 de grand diamètre par laquelle est introduit le porte-électrode 74, et une ouverture de petit diamètre 96 de laquelle sort l'extrémité du porte-électrode et l'extrémité affûtée de l'électrode.

L'ouverture de petit diamètre 96 est avantageusement bordée par une bague annulaire 97 formant un pied de maintien pour le support de porte-électrode 92 lorsque celui-ci est monté sur l'outil 88.

Dans l'exemple représenté, l'extrémité du support de porte-électrode 92 du côté de l'ouverture 96 est avantageusement ajourée, ce qui permet à l'opérateur de visualiser l'électrode lors de sa mise en place.

Comme pour le dispositif D1, le réceptacle 86 est formé d'un flacon muni d'un orifice supérieur 98 bordé d'un col 100.

Une structure de maintien 102 en position verticale du réceptacle peut également être prévue comme pour le dispositif D1.

Le col 100 est avantageusement muni d'un filetage permettant la solidarisation du support 90 sur le réceptacle 86. On pourrait cependant prévoir d'autres moyens de solidarisation, par exemple par encliquetage ou par une liaison type baïonnette.

La structure du support 90 est très proche de support 6 du dispositif D1.

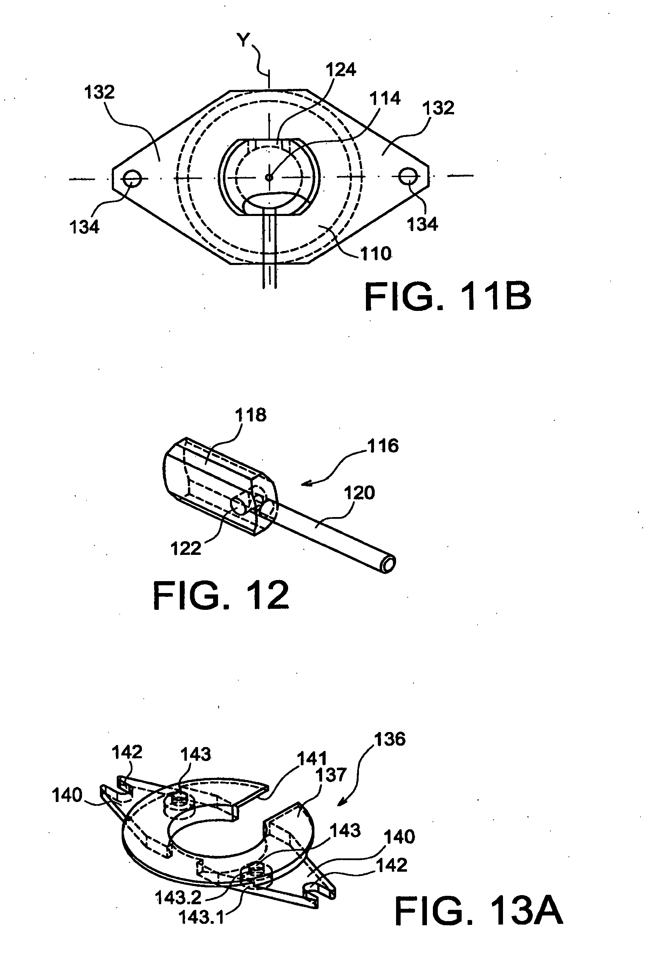

Le support d'outil 90, particulièrement visible sur les figures 11A et 11B, comporte un corps 104 d'axe longitudinal X, muni d'un passage 106 traversant d'axe longitudinal X destiné à permettre le passage d'une électrode usagée en direction de l'intérieur du réceptacle 86.

Le corps 104 comporte à une première extrémité longitudinale d'une paroi d'extrémité 108 orientée du côté de l'outil 88 et à une deuxième extrémité longitudinale un évidement circulaire 110 bordé d'un taraudage coopérant avec le filetage du col 100 du réceptacle, le col 100 est donc logé dans l'évidement 110.

La paroi 108 comporte un orifice 114 formant une extrémité du passage 106.

Le corps 104 comporte une partie intermédiaire 115 entre la paroi d'extrémité 108 et l'évidement 110, recevant un obturateur 116 de l'orifice 114 monté mobile dans le corps 104 le long d'un axe Y orthogonal à l'axe longitudinal.

L'obturateur 116 coulisse le long d'une face de la paroi 108 opposée à celle orientée du côté de l'outil 88.

Sur la figure 12, on peut voir un exemple d'obturateur 116 de type tiroir représenté seul, comportant une platine 118 et une tige de commande 120 fixée à une extrémité de la platine 118.

La platine 118 est, elle-même, munie d'un orifice traversant 122 de diamètre suffisant pour permettre le passage d'une électrode.

La partie intermédiaire 115 comporte une paroi latérale munie d'une mortaise latérale 124, dans laquelle coulisse la platine 118 et, diamétralement à l'opposé, un alésage transversal 125 d'axe Y dans lequel coulisse la tige de commande 120.

En déplaçant la platine 118 au moyen de la tige de commande 120 le long de l'axe Y, l'orifice 122 de la platine 118 peut être aligné avec l'orifice traversant 114 de la paroi d'extrémité 108, permettant alors à une électrode de traverser le support 90.

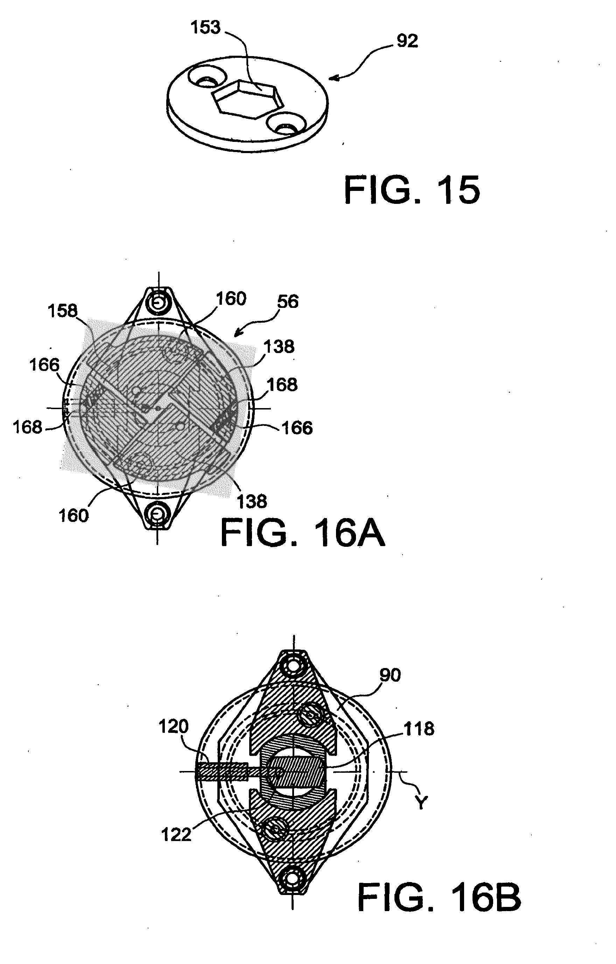

La platine 118 est normalement en position d'obturation (figure 16B).

De manière avantageuse, un moyen de rappel élastique est prévu pour ramener la platine 118 dans une position d'obturation de l'orifice traversant 114.

Dans l'exemple représenté, un ressort hélicoïdal 124 est monté en réaction entre la surface extérieure de la partie intermédiaire 115 et un bouton 126 fixé à l'extrémité libre de la tige de commande 120.

Dans l'exemple représenté, l'orifice traversant 122 de la platine 118 est positionné de telle sorte que, pour aligner celui-ci avec l'orifice traversant 114 de la paroi d'extrémité (figure 17B), il faut appliquer un effort sur la tige de commande 120 en direction de l'axe X sur la tige de commande.

En variante, l'obturateur pourrait être prévu de telle sorte que l'on applique un effort en éloignement de l'axe X pour aligner les orifices 114 et 122.

Dans l'exemple représenté, la platine comporte des bords latéraux effilés, ce qui permet de réduire les frottements lors du coulissement de la platine dans la mortaise latérale 124.

Un obturateur dans lequel la tige de commande 120 serait formée par un prolongement de la platine ne sort pas du cadre de la présente invention.

Dans l'exemple représenté, la partie intermédiaire 115 présente avantageusement sur sa surface latérale deux méplats 130 disposés de part et d'autre de l'axe X et parallèles entre eux, permettant d'éviter un blocage dans une pièce désignée 136 formant une embase de l'outil 88 et visible sur les figures 13A à 13C.

Le support 90 comporte également deux oreilles 132 en saillie latéralement s'étendant de part et d'autre de l'axe X et dans un plan perpendiculaire à l'axe X, chacune étant munie d'un alésage 134, pour le montage de l'outil 88.

L'outil 88, représenté seul sur les figures 13A à 13C, est formé principalement dans l'exemple représenté de trois pièces, une première pièce 136 formant embase de fixation de l'outil au support, une deuxième pièce 138 formant un guide pour la mise en place du support de porte-électrode 92 et une plaquette 140 de serrage-desserrage coopérant avec l'écrou du porte-électrode.

L'embase de fixation 136 comporte une surface de fixation de forme annulaire 137 de la pièce guide 138 et de deux oreilles 140 en saillie de part et d'autre de l'axe X.

Les oreilles 140 sont munies chacune d'un passage 142 recevant des tiges filetées 144 s'étendant chacune entre une oreille 132 du support et une oreille 140 de l'embase de fixation 136 de l'outil 88.

Les passages des deux oreilles 140 sont formés avantageusement par des encoches et non par des alésages pour faciliter le montage des tiges filetées 142.

Dans l'exemple représenté, la face supérieure des oreilles 142 et celle de la platine de fixation 137 sont dans deux plans différents.

Dans l'exemple représenté, la platine de fixation 137 comporte une fente 141 de sorte que, vue de dessus, la platine ait le profil de la lettre C.

Cette fente 141 reçoit avantageusement la tige de commande 120 de l'obturateur 116, ce qui permet d'obtenir un dispositif plus compact, comme on peut le voir sur la figure 13A.

L'embase de fixation 136 comporte également deux perçages 143 radialement opposés réalisés dans la platine de fixation 137, recevant des axes autour desquels pivotent les pièces de serrage de l'électrode qui seront décrites ci-dessous.

Les perçages comportent une première portion de grand diamètre 143.1 et une portion de plus petit diamètre 143.2, permettant de loger une tête de l'axe dans la portion de grand diamètre 143.1 et éviter des pièces en saillie qui pourraient gêner le montage sur le support 90.

Dans l'exemple représenté, le diamètre sur lequel sont alignés les deux perçages 143 n'est pas aligné avec l'axe reliant les deux encoches 142, afin de permettre la manipulation des pièces de serrage.

Les tiges filetées 142, dans l'exemple représenté, comportent à une extrémité une tête 144.1 et le long de leur axe une collerette 144.2 perpendiculaire à son axe, la distance séparant la tête de la collerette permettant d'insérer les oreilles 140.

Les oreilles 140 de l'embase de fixation 136 sont reçues entre la tête 144 et la collerette de chaque vis.

Un écrou 144.3 est vissé sur la partie de chaque tige filetée 142 située sous l'oreille du support 90. En vissant ou dévissant les écrous 144.3, il est possible d'ajuster la distance entre le support 90 et l'outil 88, ce qui fixe la longueur de l'électrode dépassant du porte-électrode.

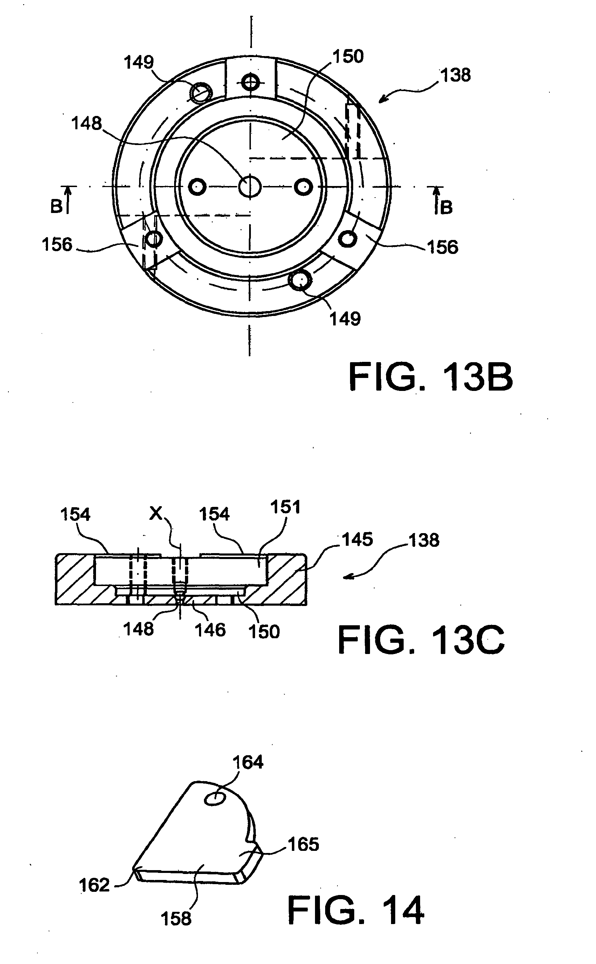

La pièce guide 138 (figure 13B et 13C) présente une paroi sensiblement annulaire 145 d'axe X obturée à une extrémité longitudinale par une paroi de fond 146. En outre, la paroi de fond 146 comporte en son centre un alésage traversant 148 d'axe X pour le passage de l'électrode.

Des perçages 149 alignés avec les perçages 143 de l'embase de fixation 136 sont réalisés dans la pièce guide.

La paroi annulaire 145 et la paroi de fond 146 délimitent un logement 151 de diamètre sensiblement égal au diamètre extérieur du pied de maintien 97 du support de porte-électrode 92.

Dans l'exemple représenté, la paroi de fond 146 comporte un évidement 150 du côté du logement 148 dans lequel est fixée une plaquette 152, représentée sur la figure 15, munie d'une lumière 153 dont la forme correspond à l'empreinte de l'écrou du porte-électrode et destiné à recevoir cet écrou et à coopérer avec lui pour le serrage et desserrage de celui-ci.

Cette plaquette 152 est fixée par exemple au moyen de vis dans le fond du logement 151 permettant son remplacement si, par exemple celle-ci est usée ou si on souhaite utiliser le dispositif avec des écrous présentant une autre empreinte.

Si on ne souhaite pas remplacer cette plaquette, elle peut être fixée de manière définitive, par exemple par collage ou soudage.

De manière avantageuse, la pièce de guidage 138 comporte des moyens 154 pour maintenir axialement le support de porte-électrode 92, tout en le laissant libre de tourner autour de l'axe X.

Les moyens 154 sont, dans l'exemple représenté, formés par trois pattes de retenue fixées sur la face supérieure de la pièce guide 138 et formant une butée axiale pour le pied de maintien du support de porte-électrode 92, empêchant celui-ci d'être séparé de l'outil 88.

Dans l'exemple représenté, la pièce guide 138 comporte trois encoches 156 pratiquées dans sa face supérieure à 120° l'une des autres et dans chacune desquelles est fixée une plaquette de retenue 154. Les plaquettes 154 sont fixées par exemple par des vis.

En outre, l'outil 88 comporte des moyens d'immobilisation 156 de l'électrode dans l'outil 88. Les moyens d'immobilisation 156 forment une pince comportant deux pièces de serrage 158 montées chacune articulées autour d'un axe 160 parallèle à l'axe X.

Dans ce mode de réalisation, les éléments de la pince se déplacent dans un plan orthogonal à l'axe X. Sur la figure 14, une des pièces 158 est représentée seule. Sur la figure 16A, les pièces de serrage 158 sont visibles en position repos, ce qui correspond à la position écartée, et sur la figure 17A, les pièces de serrage sont en contact avec l'électrode.

Les pièces de serrage 158 ont sensiblement la forme d'un quart de disque, la zone à angle droit 162 étant destinée à venir en contact avec l'électrode.

Les pièces de serrage comportent un alésage 164 pour le passage de l'axe 160 situé sensiblement dans l'angle formé entre le bord arrondi de la pièce de serrage 158 et un bord plat. Le bord arrondi comporte également à l'opposé de l'alésage, une portion en saillie 165 pour la manipulation des pièces de serrage par l'opérateur. Une extrémité de axes 160 est montée dans les alésages 143.1, 143.2 de l'embase de fixation 136 et une autre extrémité est montée dans les alésages 149 de la pièce guide. Avantageusement, les alésages 149 sont taraudés, et les axes 160 sont avantageusement formés pas des vis, vissés dans les alésages 149 assurant ainsi la fixation de la pièce guide sur l'embase de fixation.

Des moyens de rappel 166 en position écartée des pièces de serrage sont avantageusement prévus, par exemple il s'agit de ressorts montés 166 en réaction entre la pièce guide et les pièces de serrage, les ressorts 166 sont montés dans des alésages 168 réalisés dans la pièce guide.

La forme en quart de disque permet d'intégrer les pièces de serrage à l'outil qui présente une section transversale circulaire, seules les deux portions de manipulation font saillie.

La compacité du dispositif est encore améliorée.

De manière similaire à D1, l'ensemble du dispositif D2 peut être réalisé en un matériau dur comme l'acier inox ou l'aluminium anodisé.

En revanche, la platine 118 de l'obturateur 116 est réalisée en acier inox pour garantir qu'il n'y ait pas de dépôt de particules d'aluminium sur l'électrode neuve, ce qui pourrait détériorer la qualité des soudures.

Nous allons maintenant expliquer le fonctionnement du dispositif de changement d'électrode D2.

Le porte-électrode est retiré du dispositif de queusotage et est vissé dans le support de porte-électrode 92.

Dans le cas où le support de porte-électrode 92 n'est pas solidaire de l'outil 88, l'opérateur met de préférence le support de porte-électrode 92 en place sur l'outil 88 en plaçant le pied de maintien 97 dans le logement 151 de la pièce guide 138 et l'opérateur visse ensuite le porte-électrode dans le support de porte-électrode 92 pour limiter les risques de piqûres.

L'écrou du porte-électrode est logé dans l'empreinte 153 de la plaquette 154, puis le porte-électrode est vissé dans le support de porte-électrode 92.

L'opérateur arrête de visser lorsque l'écrou est en butée contre la paroi de fond 146 de la pièce guide 138.

L'opérateur désolidarise l'électrode du porte-électrode en desserrant l'écrou, pour cela il applique un couple au support de porte-électrode 92 autour de l'axe X, ce qui entraîne le porte-électrode en rotation autour de l'axe X. L'écrou étant immobilisé en rotation dans la plaquette 154, celui-ci se desserre.

Il est rappelé que le support de porte-électrode 92 est mobile en rotation autour de l'axe X.

L'électrode est alors désolidarisée du porte-électrode.

Dans le cas où le support de porte-électrode 92 ne comporte pas de taraudage coopérant avec le filetage du porte-électrode, l'opérateur applique simultanément au couple de rotation un effort axial sur le porte-électrode en direction du support 92.

La coopération des formes coniques génèrent naturellement un blocage en rotation entre le support de porte-électrode 92 et le porte-électrode, et le couple de desserrage appliqué au support de porte-électrode 92 est également transmis au porte-électrode.

L'opérateur exerce un effort sur les pièces de serrage 158 pour pincer l'électrode 11 et la maintenir dans l'outil, simultanément il retire le porte-électrode (figure 17A).

L'opérateur relâche ensuite son effort sur les pièces de serrage 158 qui s'écartent alors de l'électrode 11 sous l'effet des ressorts 166, libérant celle-ci et déplace l'obturateur 116 pour aligner les alésages 122, 114 de l'obturateur 116 et du support 90, en appuyant sur le bouton de la tige de commande 120, lorsque cet alignement est atteint, l'électrode 11 tombe par gravité dans le réceptacle 86 (figue 17B).

Pour mettre en place une nouvelle électrode 11, l'opérateur saisit une électrode neuve par son extrémité non affûtée, met en place celle-ci dans l'outil 88 par l'extrémité affûtée jusqu'à ce l'extrémité affûtée vienne en appui contre la face supérieure de la platine 118 de l'obturateur 116.

L'opérateur met ensuite le porte-électrode sur l'outil 88 en introduisant l'extrémité non affûtée de l'électrode dans le porte-électrode.

Le porte-électrode est ensuite vissé dans le support de porte-électrode 92.

L'opérateur applique ensuite un couple au support de porte-électrode 92 dans le sens d'un vissage de l'écrou du porte-électrode, l'électrode 11 est alors solidarisée au porte-électrode.

Le porte-électrode est ensuite dévissé du support de porte-électrode 92 et retiré du support de porte-électrode 92 et remis en place dans le dispositif de queusotage.

Dans l'exemple représenté, le support de porte-électrode 92 est solidaire axialement de l'outil 88, mais on peut prévoir qu'il soit indépendant, celui-ci serait vissé sur le porte-électrode à part, puis l'ensemble ainsi formé serait monté dans l'outil.

Le dispositif D2 diffère du dispositif D1 principalement, hormis la présence du support de porte-électrode 92, par l'orientation des pièces de serrage des moyens d'immobilisation de l'électrode dans le dispositif, qui sont mobiles dans un plan horizontal, alors qu'ils sont mobiles dans un plan vertical dans le dispositif D1.

Le dispositif D2 peut être adapté très facilement à un porte-électrode de soudage, par exemple en modifiant la forme du logement de la pièce de guidage de telle sorte qu'il forme un logement correspondant à l'empreinte de l'écrou du porte-électrode de soudage.

Les dispositifs D1 et D2 comportent un réceptacle d'électrodes usagées mobile, on pourrait prévoir que ce réceptacle soit réalisé directement dans la table de travail de la boîte à gant et accessible par ailleurs, et qu'il soit vidé par exemple de manière automatique, limitant encore les risques de contact.

Les dispositifs de changement d'électrode selon la présente invention protègent l'opérateur pendant toutes les étapes de retrait et de mise en place d'une électrode, les risques de déchirures des gants sont donc considérablement réduits. De plus, la manipulation des électrodes usagées se fait uniquement par l'intermédiaire du réceptacle, qui est rebouché avant sa sortie de la boîte à gant.

L'opérateur entre uniquement en contact avec les électrodes neuves et uniquement au niveau de leur partie non affûtée.

Les dispositifs de changement d'électrode selon la présente invention présentent en outre l'avantage d'être très robustes. En effet le fonctionnement est purement mécanique et ne met en oeuvre aucune structure complexe. De plus, ils sont très peu encombrants du fait de leur configuration verticale.

L'outil 88 du dispositif D2 du fait de l'orientation horizontale des pièces de serrage présente une très faible hauteur, ce qui permet de compenser la hauteur du support de porte-électrode 92.

En réalisant un dispositif D1 avec des pièces de serrage orientées horizontalement comme dans le dispositif D2, on peut obtenir avantageusement un dispositif de hauteur relativement faible.

On pourrait prévoir par exemple un actionnement automatique de l'obturateur par exemple par une commande pneumatique.

## Revendications

1. Dispositif de retrait d'une électrode d'un porte-électrode, et/ou de montage d'une électrode dans un porte-électrode, ledit porte-électrode faisant partie d'un dispositif de soudage, ledit dispositif comportant un réceptacle (2, 86) d'électrodes usagées muni d'un orifice et un ensemble monté sur ledit orifice, ledit ensemble comprenant un passage (7, 91) traversant d'axe longitudinal (X) reliant un logement (46) pour recevoir une extrémité du porte-électrode formant un mandrin, et le réceptacle (2, 86), ledit axe longitudinal (X) étant destiné à être sensiblement vertical, des moyens pour serrer ou desserrer un mandrin du porte-électrode, des moyens pour solidariser l'électrode audit dispositif et des moyens pour autoriser au non l'introduction de l'électrode usagée dans le réceptacle.

2. Dispositif de retrait d'une électrode d'un porte-électrode et/ou de montage d'une électrode dans un porte-électrode selon la revendication 1, dans lequel ledit ensemble comporte un outil (4, 88) comprenant le logement (46) et les moyens pour serrer ou desserrer le mandrin de porte-électrode et les moyens pour solidariser l'électrode audit dispositif, et un support (6, 90) monté sur l'orifice du réceptacle (2, 86) et comprenant les moyens pour autoriser au non l'introduction de l'électrode usagée dans le réceptacle.

3. Dispositif de retrait d'une électrode d'un porte-électrode et/ou de montage d'une électrode dans un porte-électrode selon la revendication 1 ou 2, dans lequel les moyens pour serrer ou desserrer le mandrin de porte-électrode sont formés par une empreinte correspondant à celle de l'écrou de serrage/desserrage du mandrin, présente dans ledit logement.

4. Dispositif de retrait d'une électrode d'un porte-électrode et/ou de montage d'une électrode dans un porte-électrode selon l'une des revendications 1 à 3, dans lequel les moyens pour solidariser l'électrode audit dispositif comportent deux éléments mobiles (54, 158) autour de deux axes et munis de deux extrémités destinées à venir en contact avec l'électrode pour la pincer.

5. Dispositif de retrait d'une électrode d'un porte-électrode et/ou de montage d'une électrode dans un porte-électrode selon la revendication 4, comportant des moyens de rappel des deux éléments (54, 158) mobiles pour solidariser l'électrode audit dispositif en position écartée l'un de l'autre.

6. Dispositif de retrait d'une électrode d'un porte-électrode et/ou de montage d'une électrode dans un porte-électrode selon l'une des revendications 1 à 5, dans lequel les moyens pour autoriser ou non l'introduction de l'électrode usagée dans le réceptacle (2, 86) comportent un obturateur (26, 116) obturant le passage longitudinal (7, 91), muni d'un orifice (32, 122) qui, en position repos, est désaligné dudit passage (7, 91), et est apte à être aligné avec celui-ci par manipulation de l'obturateur (26,116).

7. Dispositif de retrait d'une électrode d'un porte-électrode et/ou de montage d'une électrode dans un porte-électrode selon la revendication 6, dans lequel l'obturateur (26, 116) est monté apte à coulisser selon un axe orthogonal (Y) à l'axe longitudinal (X) dans le support (6, 90).

8. Dispositif de retrait d'une électrode d'un porte-électrode et/ou de montage d'une électrode dans un porte-électrode selon la revendication 6 ou 7, comportant des moyens pour régler la distance entre l'obturateur et le logement dudit mandrin du dispositif.

9. Dispositif de retrait d'une électrode d'un porte-électrode et/ou de montage d'une électrode dans un porte-électrode selon la revendication 8, dans lequel l'outil est monté sur le support (6, 90) au moyen d'au moins deux tiges filetées, les moyens de réglage sont formés par des ensembles d'écrou et/ou contre-écrou vissés sur les tiges filetées.

10. Dispositif de retrait d'une électrode d'un porte-électrode et/ou de montage d'une électrode dans un porte-électrode selon l'une des revendications 1 à 9, comportant également un support de porte-électrode (92), le porte-électrode comportant au niveau de son extrémité portant l'électrode une pièce tronconique (80), ledit support de porte-électrode (92) formant un logement de forme tronconique correspondant à celle de la pièce tronconique (80) du porte-électrode et formant un prolongement amont du logement de porte-électrode.

11. Dispositif de retrait d'une électrode d'un porte-électrode et/ou de montage d'une électrode dans un porte-électrode selon la revendication 10 en combinaison avec la revendication 2, dans lequel le support de porte-électrode (92) est solidaire axialement dudit outil et est apte à pivoter par rapport à celui-ci autour de l'axe longitudinal.

12. Dispositif de retrait d'une électrode d'un porte-électrode et/ou de montage d'une électrode dans un porte-électrode selon la revendication 10 ou 11, dans lequel le support de porte-électrode (92) comporte un taraudage destiné à coopérer avec le filetage du porte-électrode, ledit taraudage étant en amont du logement de forme tronconique.

13. Dispositif de retrait d'une électrode d'un porte-électrode et/ou de montage d'une électrode dans un porte-électrode selon l'une des revendications 10 à 12, comportant des moyens de retenue axiale du support de porte-électrode (92) formés par des pattes (154) fixées sur l'outil.

14. Procédé de retrait d'une électrode d'un porte-électrode au moyen du dispositif selon l'une des revendications 6 à 9, comportant les étapes :
- introduction du porte-électrode dans le logement (46), l'élément de serrage du mandrin pénétrant dans les moyens de serrage/desserrage et l'extrémité libre de l'électrode venant en contact avec l'obturateur (26, 116),
- application d'un couple de desserrage au porte-électrode,
- solidarisation de l'électrode (11) audit dispositif,
- retrait du porte-électrode,
- désolidarisation de l'électrode (11) dudit dispositif,
- ouverture du passage menant au réceptacle (2, 86) et chute par gravité de l'électrode (11) dans ledit réceptacle (2, 86).

15. Procédé de retrait d'une électrode selon la revendication 14 au moyen d'un dispositif selon l'une des revendications 10 à 13 en combinaison avec l'une des revendications 6 à 9, dans lequel le couple de desserrage est appliqué au dit support de porte-électrode (92) et transmis au porte-électrode.

16. Procédé de montage d'une électrode d'un porte-électrode au moyen du dispositif selon l'une des revendications 6 à 9, comportant les étapes :
- mise en place de l'électrode (11) dans le passage (7), l'extrémité affûtée de l'électrode venant en contact avec l'obturateur,
- mise en place du porte-électrode sans électrode dans le logement, l'extrémité de l'électrode faisant saillie du dispositif pénétrant dans le mandrin,
- application d'un couple de serrage sur le mandrin, solidarisant l'électrode (11) au mandrin,
- retrait du porte-électrode muni de l'électrode (11).

17. Procédé de montage d'une électrode selon la revendication 16 au moyen d'un dispositif selon l'une des revendications 10 à 13 en combinaison avec l'une des revendications 6 à 9, dans lequel le couple de serrage est appliqué au dit support de porte-électrode (92) et transmis au porte-électrode.

## Patentansprüche

1. Vorrichtung zum Zurückziehen einer Elektrode von einem Elektrodenträger und/oder zur Montage einer Elektrode in einem Elektrodenträger, wobei der Elektrodenträger Teil einer Schweißvorrichtung ist, wobei die Vorrichtung einen Behälter (2, 86) für gebrauchte Elektroden umfasst, der mit einer Öffnung ausgestattet ist, sowie eine auf der Öffnung montierte Anordnung, wobei die Anordnung eine Durchgangspassage (7, 91) mit longitudinaler Achse (X) umfasst, die eine Aufnahme (46) zum Empfangen eines Endes des Elektrodenträgers, die ein Spannfutter bildet, und den Behälter (2, 86) verbindet, wobei die longitudinale Achse (X) dazu ausgelegt ist, im Wesentlichen vertikal zu sein, ferner umfassend Mittel zum Spannen oder Entspannen eines Spannfutters des Elektrodenträgers, Mittel zum Verbinden der Elektrode mit der Vorrichtung sowie Mittel zum Ermöglichen oder Verhindern des Einführens der gebrauchten Elektrode in den Behälter.

2. Vorrichtung zum Zurückziehen einer Elektrode von einem Elektrodenträger und/oder zur Montage einer Elektrode in einem Elektrodenträger nach Anspruch 1, bei der die Anordnung ein Werkzeug (4, 88) umfasst, welches die Aufnahme (46) umfasst, sowie die Mittel zum Spannen oder Entspannen des Spannfutters des Elektrodenträgers und die Mittel zum Verbinden der Elektrode mit der Vorrichtung, sowie eine Stütze (6, 90), die an der Öffnung des Behälters (2, 86) montiert ist und die Mittel zum Ermöglichen oder Verhindern des Einführens der gebrauchten Elektrode in den Behälter umfasst.

3. Vorrichtung zum Zurückziehen einer Elektrode von einem Elektrodenträger und/oder zur Montage einer Elektrode in einem Elektrodenträger nach Anspruch 1 oder 2, bei der die Mittel zum Spannen oder Entspannen des Spannfutters des Elektrodenträgers durch eine Vertiefung gebildet sind, die jener der Spann-/Entspannmutter des Spannfutters entspricht, die in der Aufnahme vorgesehen ist.

4. Vorrichtung zum Zurückziehen einer Elektrode von einem Elektrodenträger und/oder zur Montage einer Elektrode in einem Elektrodenträger nach einem der Ansprüche 1 bis 3, bei der die Mittel zum Verbinden der Elektrode mit der Vorrichtung zwei Elemente (54, 158) umfassen, die um zwei Achsen bewegbar und mit zwei Enden ausgestattet sind, welche dazu ausgelegt sind, in Kontakt mit der Elektrode zu gelangen, um sie einzuklemmen.

5. Vorrichtung zum Zurückziehen einer Elektrode von einem Elektrodenträger und/oder zur Montage einer Elektrode in einem Elektrodenträger nach Anspruch 4, umfassend Mittel zum Rückstellen der zwei beweglichen Elemente (54, 158) zum Verbinden der Elektrode mit der Vorrichtung in eine voneinander beabstandete Position.

6. Vorrichtung zum Zurückziehen einer Elektrode von einem Elektrodenträger und/oder zur Montage einer Elektrode in einem Elektrodenträger nach einem der Ansprüche 1 bis 5, bei der die Mittel zum Ermöglichen oder Verhindern des Einführens der gebrauchten Elektrode in den Behälter (2, 86) einen Verschluss (26, 116) umfassen, der die longitudinale Passage (7, 91) verschließt, ausgestattet mit einer Öffnung (32, 122), welche in der Ruheposition nicht mit der Passage (7, 91) ausgerichtet ist und dazu ausgelegt ist, mit ihr durch Betätigung des Verschlusses (26, 116) ausgerichtet zu werden.

7. Vorrichtung zum Zurückziehen einer Elektrode von einem Elektrodenträger und/oder zur Montage einer Elektrode in einem Elektrodenträger nach Anspruch 6, bei der der Verschluss (26, 116) entlang einer Achse (Y) orthogonal zur longitudinalen Achse (X) in der Stütze (6, 90) verschiebbar montiert ist.

8. Vorrichtung zum Zurückziehen einer Elektrode von einem Elektrodenträger und/oder zur Montage einer Elektrode in einem Elektrodenträger nach Anspruch 6 oder 7, umfassend Mittel zum Regeln des Abstands zwischen dem Verschluss und der Aufnahme des Spannfutters der Vorrichtung.

9. Vorrichtung zum Zurückziehen einer Elektrode von einem Elektrodenträger und/oder zur Montage einer Elektrode in einem Elektrodenträger nach Anspruch 8, bei der das Werkzeug an der Stütze (6, 90) mit Hilfe von wenigstens zwei Gewindestangen montiert ist, wobei die Regelungsmittel durch Mutter- und/oder Gegenmutteranordnungen gebildet sind, die auf die Gewindestangen geschraubt sind.

10. Vorrichtung zum Zurückziehen einer Elektrode von einem Elektrodenträger und/oder zur Montage einer Elektrode in einem Elektrodenträger nach einem der Ansprüche 1 bis 9, ferner umfassend eine Elektrodenträgerstütze (92), wobei der Elektrodenträger im Bereich seines die Elektrode tragenden Endes ein kegelförmiges Teil (80) umfasst, wobei die Elektrodenträgerstütze (92) eine Aufnahme mit Kegelform entsprechend jener des kegelförmigen Teils (80) des Elektrodenträgers bildet und eine stromaufwärtige Verlängerung der Aufnahme des Elektrodenträgers bildet.

11. Vorrichtung zum Zurückziehen einer Elektrode von einem Elektrodenträger und/oder zur Montage einer Elektrode in einem Elektrodenträger nach Anspruch 10 in Kombination mit Anspruch 2, bei der die Elektrodenträgerstütze (92) axial mit dem Werkzeug verbunden und dazu ausgelegt ist, bezüglich zu diesem um die longitudinale Achse zu schwenken.

12. Vorrichtung zum Zurückziehen einer Elektrode von einem Elektrodenträger und/oder zur Montage einer Elektrode in einem Elektrodenträger nach Anspruch 10 oder 11, bei der die Elektrodenträgerstütze (92) eine Gewindebohrung umfasst, die dazu ausgelegt ist, mit dem Gewinde des Elektrodenträgers zusammenzuwirken, wobei die Gewindebohrung stromaufwärts der Aufnahme mit Kegelform ist.

13. Vorrichtung zum Zurückziehen einer Elektrode von einem Elektrodenträger und/oder zur Montage einer Elektrode in einem Elektrodenträger nach einem der Ansprüche 10 bis 12, umfassend Mittel zum axialen Halten der Elektrodenträgerstütze (92), die durch Klauen (154) gebildet sind, welche an dem Werkzeug befestigt sind.

14. Verfahren zum Zurückziehen einer Elektrode von einem Elektrodenträger mit Hilfe der Vorrichtung nach einem der Ansprüche 6 bis 9, umfassend die folgenden Schritte:
- Einführen des Elektrodenträgers in die Aufnahme (46), wobei das Spannelement des Spannfutters in die Mittel zum Spannen/Entspannen eindringt und das freie Ende der Elektrode in Kontakt mit dem Verschluss (26, 116) gelangt,
- Ausüben eines Entspann-Moments auf den Elektrodenträger,
- Verbinden der Elektrode (11) mit der Vorrichtung,
- Zurückziehen des Elektrodenträgers,
- Lösen der Verbindung der Elektrode (11) mit der Vorrichtung,
- Öffnen der zum Behälter (2, 86) führenden Passage und Fall der Elektrode (11) durch Schwerkraft in den Behälter (2, 86).

15. Verfahren zum Zurückziehen einer Elektrode nach Anspruch 14 mit Hilfe einer Vorrichtung nach einem der Ansprüche 10 bis 13 in Kombination mit einem der Ansprüche 6 bis 9, bei dem das Entspann-Moment auf die Elektrodenträgerstütze (92) ausgeübt und auf den Elektrodenträger übertragen wird.

16. Verfahren zur Montage einer Elektrode eines Elektrodenträgers mit Hilfe der Vorrichtung nach einem der Ansprüche 6 bis 9, umfassend die folgenden Schritte:
- Platzieren der Elektrode (11) in der Passage (7), wobei das angespitzte Ende der Elektrode in Kontakt mit dem Verschluss gelangt,
- Platzieren des Elektrodenträgers ohne Elektrode in der Aufnahme, wobei das Ende der Elektrode, das aus der Vorrichtung vorsteht, in das Spannfutter eindringt,
- Ausüben eines Spann-Moments auf das Spannfutter, wodurch die Elektrode (11) mit dem Spannfutter verbunden wird,
- Zurückziehen des Elektrodenträgers, der mit der Elektrode (11) ausgestattet ist.

17. Verfahren zur Montage einer Elektrode nach Anspruch 16 mit Hilfe einer Vorrichtung nach einem der Ansprüche 10 bis 13 in Kombination mit einem der Ansprüche 6 bis 9, bei dem das Spann-Moment auf die Elektrodenträgerstütze (92) ausgeübt und auf den Elektrodenträger übertragen wird.

## Claims

1. Device for removing an electrode from an electrode holder and/or fitting an electrode into an electrode holder, said electrode holder forming part of a welding device, said device comprising a spent electrode receptacle (2, 86) provided with an orifice and an assembly mounted on said orifice, said assembly comprising a through passage (7, 91) with a longitudinal axis (X) connecting a housing (46) to hold one end of the electrode holder forming a mandrel, and the receptacle (2, 86), said longitudinal axis (X) being approximately vertical, means of tightening or loosening an electrode holder mandrel, means of fixing the electrode to said device and means of enabling or disabling dropping of the spent electrode into the receptacle.

2. Device for removing an electrode from an electrode holder and/or fitting an electrode into an electrode holder according to claim 1, in which said assembly comprises a tool (4, 88) comprising the housing (46) and the means of tightening or loosening the electrode holder mandrel and the means for fixing the electrode to said device, and a support (6, 90) mounted on the orifice of the receptacle (2, 86) and comprising means of enabling or disabling dropping of the spent electrode into the receptacle.

3. Device for removing an electrode from an electrode holder and/or fitting an electrode into an electrode holder according to claim 1 or 2, in which means of tightening or loosening the electrode holder mandrel are formed by a recess present in said housing corresponding to the impression of the mandrel tightening/loosening nut.

4. Device for removing an electrode from an electrode holder and/or fitting an electrode into an electrode holder according to one of claims 1 to 3, in which means for fixing the electrode to said device comprise two elements (54, 158) mobile about two axes and provided with two ends designed to come into contact with the electrode to grip it.

5. Device for removing an electrode from an electrode holder and/or fitting an electrode into an electrode holder according to claim 64, comprising means for returning the two mobile elements (54, 158) in a position moved away from each other, to fix the electrode to said device

6. Device for removing an electrode from an electrode holder and/or fitting an electrode into an electrode holder according to one of claims 1 to 59, in which means to enable or disable dropping of the spent electrode into the receptacle (2, 86) comprise a closer (26, 116) closing off the longitudinal passage (7, 91), in which there is an orifice (32, 122) that is not aligned with said passage (7, 91) when in the rest position, and which can be aligned with it by manipulating the closer (26, 116).

7. Device for removing an electrode from an electrode holder and/or fitting an electrode into an electrode holder according to claim 6, in which the closer (26, 116) is installed free to slide along an axis (Y) orthogonal to the longitudinal axis (X) in the support (6, 90).

8. Device for removing an electrode from an electrode holder and/or fitting an electrode into an electrode holder according to claim 6 or 7, comprising means of adjusting the distance between the closer and the housing of said mandrel of the device.

9. Device for removing an electrode from an electrode holder and/or fitting an electrode into an electrode holder according to claim 8, in which the tool is installed on the support (6, 90) by means of at least two threaded rods, the adjustment means are formed by nut and/or counter-nut assemblies screwed onto the threaded rods.

10. Device for removing an electrode from an electrode holder and/or fitting an electrode into an electrode holder according to one of claims 1 to 9, also comprising an electrode holder support (92), the electrode holder comprising a tapered part (80) at its end holding the electrode, said electrode holder support (92) forming a tapered housing corresponding to the shape of the tapered part (80) of the electrode holder and forming an upstream extension of the electrode holder housing.

11. Device for removing an electrode from an electrode holder and/or fitting an electrode into an electrode holder according to claim 10 combined with claim 2, in which the electrode holder support (92) is fixed to said tool along its axial direction and is free to pivot relative to it about the longitudinal axis.

12. Device for removing an electrode from an electrode holder and/or fitting an electrode into an electrode holder according to claim 10 or 11, in which the electrode holder support (92) comprises an internal thread to cooperate with the thread on the electrode holder, said thread being on the upstream side of the tapered housing.

13. Device for removing an electrode from an electrode holder and/or fitting an electrode into an electrode holder according to one of claims 10 to 12, comprising means of axially retaining the electrode holder support (92) formed by tabs (154) fixed on the tool.

14. Method for removing an electrode from an electrode holder using the device according to one of claims 6 to 9, comprising the following steps:
- insert the electrode holder into the housing (46), the mandrel tightening element penetrating into the tightening/loosening means and the free end of the electrode coming into contact with the closer (26, 116),
- apply a loosening torque to the electrode holder,
- fix the electrode (11) to said device,
- remove the electrode holder,
- detach the electrode (11) from said device,
- open the passage leading to the receptacle (2, 86) and the electrode (11) drops by gravity into said receptacle (2, 86).

15. Method for removing an electrode according to claim 14, using a device according to one of claims 10 to 13 in combination with one of claims 6 to 9, in which the loosening torque is applied to said electrode holder support (92) and transmitted to the electrode holder.

16. Method of fitting an electrode into an electrode holder using the device according to one of claims 6 to 9, comprising the following steps:
- put the electrode (11) into place in the passage (7), the sharp end of the electrode coming into contact with the closer,
- put the electrode holder with no electrode into position in the housing, the end of the electrode projecting from the device penetrating into the mandrel,
- apply a tightening torque to the mandrel, fixing the electrode (11) to the mandrel,
- remove the electrode holder fitted with the electrode (11).

17. Method for placing an electrode according to claim 16 using a device according to one of claims 10 to 13 in combination with one of claims 6 to 9, in which the tightening torque is applied to said electrode holder support (92) and transmitted to the electrode holder.
